# EUROPÄISCHE PATENTSCHRIFT

(11) **EP 1 477 690 B1**
(45) Veröffentlichungstag und Bekanntmachung des Hinweises auf die Patenterteilung: **25.03.2009**
(21) Anmeldenummer: 04010996.9
(22) Anmeldetag: 08.05.2004
(51) Int. Cl.: F16C 11/06

(54) **Kugelgelenkverbindung**
Ball joint
Articulation à rotule

(30) Priorität: 16.05.2003 DE 10322265
(43) Veröffentlichungstag der Anmeldung: 17.11.2004
(73) Patentinhaber: Stabilus GmbH, 56070 Koblenz (DE)
(72) Erfinder: Muders, Paul, Dipl.-Ing., 56321 Rhens (DE); Born, Frank , Dipl.-Ing. (FH), 56379 Dienethal (DE); Schwab, Wilhelm, Dipl.-Ing. (FH), 56564 Neuwied (DE); Stein, Andre, Dipl.-Ing. (FH), 56329 St. Goar-Werlau (DE); Mintgen, Rolf, Dipl.-Ing. (FH), 56743 Thür (DE)
(74) Vertreter: Klein, Thomas

(56) Entgegenhaltungen:
- DE-A1- 19 904 031
- US-A- 4 131 957
- US-A- 4 967 318
- US-A- 5 374 024
- US-A- 5 409 320
- US-A- 5 833 383
- US-A- 5 931 597
- US-B1- 6 190 080
- US-B1- 6 382 865

## Beschreibung

Die Erfindung bezieht sich auf eine Kugelgelenkverbindung mit einem eine Befestigungsstelle zur festen Anordnung aufweisenden Halteteil und einer über ein Kugelgelenk an dem Halteteil in einem Schwenkwinkelbereich in einer Schwenkebene schwenkbar angeordneten Stangenteil eines Kolben-Zylinderaggre-gats, wobei das Kugelgelenk eine Kugelpfanne mit einer als Kugelsitz dienenden kugelkalottenförmigen Ausnehmung der Kugelpfanne aufweist, die eine radial gerichtete Kalottenöffnung besitzt, durch die ein kugelartiges Bauteil in den Kugelsitz einführbar und in der Kugelpfanne bewegbar lagerbar ist, das entweder von einer Anlageschulter der Kugelpfanne hintergriffen wird *oder mit einem Kalottenboden, durch den die Kalottenöffnung abgedeckt ist*, *verschließbar ist,* wobei sich die Befestigungsstelle und das Kugelgelenk etwa in der Schwenkebene befinden und das Stangenteil von dem kugelartigen Bauteil aus einen Zapfenschlitz durchragt, der sich sektorartig mindestens dem Schwenkwinkel entsprechend radial zum Kugelsitz erstreckt und eine mindestens der Dicke des Stangenteils entsprechende Breite aufweist.

Bei derartigen Kugelgelenkverbindungen ist es bekannt, die Befestigungsstelle zur festen Anordnung des Halteteils quer zur Schwenkebene des Stangenteils auszurichten. Dadurch führt der Kraftfluß der Kugelgelenkverbindung zu Biegemomenten an der Befestigungsstelle und an dem Bauteil, an dem das Halteteil fest angeordnet werden soll. Dies macht einen teuren und massiven Aufbau dieses Bauteils, insbesondere eines Karosserieblechs eines Kraftfahrzeugs erforderlich.

Aus US-A-5 833 383 und der US-A-4 967 318 ist eine Kugelgelenkverbindung der eingangs genannten Art bekannt, bei dem sich die Kalottenöffnung in der Schwenkebene des Stangenteils erstreckt.

Aus der US-A-5 931 597 und der 5 374 024 ist eine Kugelgelenkverbindung bekannt, die eine Gelenkfunktion zu erfüllen hat und die kein Stangenteil eines Kolben-Zylinderaggregats aufweist.

Aus der US-A- 5 931 597 ist ein Kugelgelenk bekannt, bei dem zwei zueinandergerichtete Kugelpfannen ein kugelförmiges Bauteil zwischen sich aufnehmen.

Aufgabe der Erfindung ist es, eine Kugelgelenkverbindung der eingangs genannten Art zu schaffen, die einen einfachen Aufbau und eine geringe Belastung des Halteteils sowie des Bauteils, an dem das Halteteil fest angeordnet werden soll, ermöglicht.

Diese Aufgabe wird erfindungsgemäß dadurch gelöst, daß im Falle eines Kalottenbodens die Kalottenöffnung entgegengesetzt dem Zapfenschlitz in die kalottenförmige Ausnehmung mündet, wobei das Halteteil an dem die Mündung der Kalottenöffnung aufweisenden Ende Befestigungsstellen zur Befestigung an einer Karosserie oder einer Tür aufweist oder daß im Falle einer Anlageschulter die Kalottenöffnung sich unter einem Winkel zur Schwenkebene des Stangenteils erstreckt, so *daß die Kalottenöffnung sich nicht in der Kraftflußrichtung der Kugelgelenkverbindung befindet.*

Damit ist der Kraftfluß der von der Kugelgelenkverbindung zu übertragenden Kraft weitgehend in Richtung der Schwenkebene gerichtet, so daß an der Befestigungsstelle im wesentlichen nur eine Zug- oder Druckkraft, nicht aber eine ein Biegemoment erzeugende Kraft von dem Halteteil und dem Bauteil, an dem das Halteteil fest angeordnet wird, aufgenommen werden muß. Dies ermöglicht eine leichte Ausbildung dieser Teile.

Das Stangenteil ist eine Kolbenstange des Kolben-Zylinderaggregats.

Eine Ausbildungsmöglichkeit besteht darin, daß die Kugelpfanne an dem Halteteil angeordnet ist.

Dabei kann in einfachem Aufbau das kugelartige Bauteil eine Kugel sein, die einen das Stangenteil bildenden, radial sich erstreckenden Kugelzapfen besitzt, der von der Kugel aus durch den Zapfenschlitz des Halteteils hindurch geführt ist, der sich unter einem Winkel zur Kalottenöffnung erstreckt.

Da die Kalottenöffnung sich nicht in der Kraftflußrichtung befindet, wird die Kugel bei Zug- oder Druckbelastung sicher in der Kugelpfanne abgestützt.

Vorzugsweise erstreckt sich dabei der Zapfenschlitz unter einem Winkel von etwa 90° zur Kalottenöffnung.

In einer anderen, ebenfalls einfach aufgebaute Ausbildung kann das kugelartige Bauteil eine Kugel sein, die einen das Stangenteil bildenden, radial sich erstreckenden Kugelzapfen besitzt, der von der Kugel aus durch den Zapfenschlitz des Halteteils hindurch geführt ist, wobei in Bezug auf den Kugelsitz die Kalottenöffnung dem Zapfenschlitz etwa diametral gegenüber liegt und durch einen Kalottenboden verschließbar ist, an dem das kugelartige Bauteil abstützbar ist.

Dabei kann der Kalottenboden ein separat eingesetztes Bauteil sein oder aber durch das Bauteil, an dem das Halteteil fest angeordnet werden soll, gebildet werden.

Auch hier erfolgt bei Zug- oder Druckbelastung eine sichere Abstützung der Kugel.

Zur einfachen Herstellung können Kugel und Kugelzapfen getrennt hergestellt sein, wobei die Kugel mit einer radial gerichteten Gewindebohrung versehen ist, in der an seinem einen Ende mit einem entsprechenden Gewinde versehene Kugelzapfen eingeschraubt ist.

Dabei ist der Herstellungsprozeß besonders einfach, wenn das Gewinde der Gewindebohrung ein selbstformendes Gewinde ist, das durch Einschrauben des Gewindes des Kugelzapfens in eine Bohrung der Kugel erzeugt ist.

Zur Verdrehsicherung während des Einschraubens des Kugelzapfens in die Kugel kann die Kugel eine radial nach außen mündende Ausnehmung aufweisen, die sich etwa koaxial zur Kalottenöffnung erstreckt, wobei ein Haltewerkzeug durch die Kalottenöffnung in die Ausnehmung eingeführt werden kann.

Erstreckt sich der Zapfenschlitz in einem Endbereich etwa axial zur Kalottenöffnung nach außen mündend, so kann die Kugel mit dem bereits daran befindlichen Stangenteil einfach montiert werden.

In einer weiteren ebenfalls einfach aufgebauten Ausführung kann die Kugelpfanne an dem Stangenteil angeordnet sein, wobei vorzugsweise die Kugelpfanne an einem Kugelpfannenhalter angeordnet ist, der axial, insbesondere koaxial an einem Ende des Stangenteils angeordnet ist.

Dabei ist in einfacher Ausbildung der Kugelpfannenhalter mittels einer Schraubverbindung mit dem Stangenteil verbunden, wobei das mit einem Gewinde versehene Ende des Stangenteils in eine Gewindebohrung des Kugelpfannenhalters eingeschraubt ist.

Um das kugelartige Bauteil in einfacher Weise an dem Halteteil anordnen zu können, kann das kugelartige Bauteil einen durch die Kalottenöffnung in die Kugelpfanne einführbaren Kugelabschnitt aufweisen, der mittels einem oder mehreren Halteelementen an dem Halteteil anordenbar ist.

Zur Befestigung des kugelartigen Bauteils am Halteteil kann in einer Ausbildung das Halteteil eine sich etwa quer zur Schwenkebene erstreckende Achse sein, die mit einem oder beiden Enden an dem Halteteil befestigt ist.

In einer anderen Ausbildung kann das oder die Enden der Achse einteilig mit dem Kugelabschnitt ausgebildet sein.

Die Achse ist auf einfache Art mit dem Kugelabschnitt dadurch verbunden, die Achse ein eine entsprechende Bohrung des Kugelabschnitts durchragender Achszapfen ist.

Zum einfachen Einsetzen des kugelartigen Bauteils in die Kugelpfanne und anschließenden Sichern darin, besitzt die Kugelpfanne einen Verriegelungskorb, der in eine Ausnehmung des Halteteils, des Stangeteils oder des Kugelpfannenhalters eingesetzt ist.

Dabei ist das Einsetzen des kugelförmigen Baulteils besonders einfach durchführbar, wenn der Verriegelungskorb von der Kugelpfanne frei wegragende Haltearme besitzt, die kreisformartig angeordnet und radial beweglich sind sowie sich in Erstreckungsrichtung der Kalottenöffnung erstrecken und zwischen sich die Kalottenöffnung bilden.

Zur einfachen Sicherung des Verriegelungskorbes in der Ausnehmung des Halteteils, kann der Verriegelungskorb an einem oder beiden Enden radial nach außen gerichtete Rasten besitzen, die bei in die Ausnehmung des Halteteils, des Stangenteils oder des Kugelpfannenhalters eingesetztem Verriegelungskorb den oder die Mündungsbereiche der Öffnung hintergreifen.

Eine feste Anordnung des Halteteils an dem Haltebauteil ist dadurch erreichbar, daß die Befestigungsstelle durch eine oder mehrere Ausnehmungen, insbesondere durch Langlöcher oder durch eine Klemmkeilverbindung gebildet ist.

Ausführungsbeispiele der Erfindung sind in der Zeichnung dargestellt und werden im folgenden näher beschrieben. Es zeigen
- Figur 1: einen Querschnitt einer Seitenansicht eines ersten Ausführungsbeispiels einer Kugelgelenkverbindung
- Figur 2: einen Querschnitt einer Seitenansicht eines zweiten Ausführungsbeispiels einer Kugelgelenkverbindung
- Figur 3: einen Querschnitt einer Draufsicht der Kugelgelenkverbindung nach Figur 2
- Figur 4: eine perspektivische Ansicht des Halteteils der Kugelgelenkverbindung nach Figur 2
- Figur 5: eine Ansicht eines dritten Ausführungsbeispiels einer Kugelgelenkverbindung
- Figur 6: eine Seitenansicht der Kugelgelenkverbindung nach Figur 5
- Figur 7: einen Querschnitt einer Draufsicht der Kugelgelenkverbindung nach Figur 5
- Figur 8: eine perspektivische Ansicht eines ersten Ausführungsbeispiels des Halteteils der Kugelgelenkverbindung nach Figur 5
- Figur 9: eine perspektivische Ansicht eines zweiten Ausführungsbeispiels des Halteteils der Kugelgelenkverbindung nach Figur 5
- Figur 10: einen Querschnitt einer Seitenansicht eines vierten Ausführungsbeispiels einer Kugelgelenkverbindung
- Figur 11: einen Querschnitt einer Seitenansicht eines fünften Ausführungsbeispiels einer Kugelgelenkverbindung
- Figur 12: einen Querschnitt einer Seitenansicht eines sechsten Ausführungsbeispiels einer Kugelgelenkverbindung
- Figur 13: eine Ansicht eines Halteteils der Kugelgelenkverbindung nach Figur 12
- Figur 14: einen Querschnitt des Halteteils nach Figur 13
- Figur 15: eine Rückansicht des Halteteils nach Figur 13
- Figur 16: eine perspektivische Ansicht des Halteteils nach Figur 13
- Figur 17: eine Ansicht eines Kalottenbodens der Kugelgelenkverbindung nach Figur 12
- Figur 18: einen Querschnitt des Kalottenbodens nach Figur 17
- Figur 19: eine perspektivische Ansicht de Kalottenbodens nach Figur 17.

Die in den Figuren dargestellten Kugelgelenkverbindungen besitzen ein Halteteil 1, 1', 1" das an einem nicht dargestellten Bauteil eines Kraftfahrzeugs wie der Karosserie oder einer Tür fest anordenbar ist. Über ein Kugelgelenk 2 ist eine Kolbenstange 3 einer nicht näher dargestellten Kolben-Zylindereinheit eines Türfeststellers mit dem Halteteil 1, 1', 1" verbunden.

Das Kugelgelenk 2 weist eine Kugelpfanne 4 auf, die eine einen Kugelsitz bildende kugelkalottenförmige Ausnehmung 6 mit einer radial gerichteten Kalottenöffnung 5 aufweist.

Durch die Kalottenöffnung 5 ist von außen ein kugelartiges Bauteil wie eine Kugel 7 oder ein Kugelabschnitt 8 radial in die kugelkalottenförmige Ausnehmung 6 einführbar. Die Kugelpfanne 4 erstreckt sich zur Kalottenöffnung 5 hin über ihre Mittellinie hinaus und bildet dabei eine das kugelartige Bauteil hintergreifende Anlageschulter 9, durch die das kugelartige Bauteil in der kugelkalottenförmigen Ausnehmung 6 gehalten wird.

Das kugelartige Bauteil sitzt mit soviel Preßsitz in der kugelkalottenförmigen Ausnehmung 6, daß diese Verbindung spielfrei ist, das kugelartige Bauteil aber noch in der kugelkalottenförmigen Ausnehmung 6 sich verdrehen läßt.

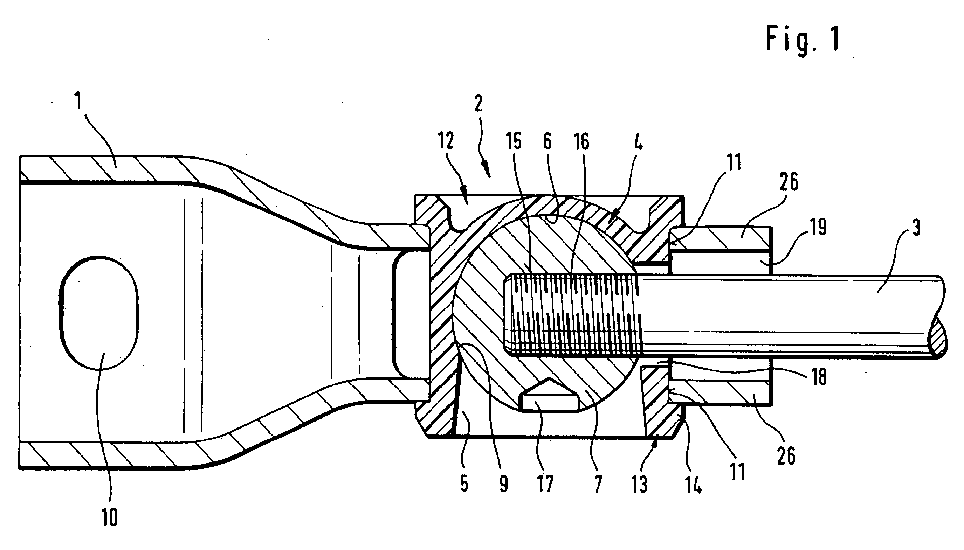

In Figur 1 ist das Halteteil 1 als Gabelstück u-förmigen Querschnitts ausgebildet, das an seinem einen Endbereich ein eine Befestigungsstelle bildendes Langloch 10 besitzt, durch das eine nicht dargestellte Schraube zum Anschrauben an die Karosserie oder die Tür des Kraftfahrzeugs hindurchgeführt werden kann.

An dem anderen Endbereich des Gabelstücks ist quer zu dessen Längserstreckung eine durchgehende Ausnehmung 11 runden Querschnitts ausgebildet, in die ein als verschleißfestes Kunststoffteil ausgebildeter Verriegelungskorb 12 eingesetzt ist, der die Kugelpfanne 4 aufweist. Die Querschnittskontur des Verriegelungskorbes 12 entspricht dem Querschnitt der Ausnehmung 11 des Gabelstücks. Der Verriegelungskorb 12 besitzt ausgehend von der kalottenförmigen Ausnehmung 6 koaxial zur Ausnehmung 11 frei wegragend einen Haltering 13, der radial federnd ausgebildet ist und dessen Öffnung die Kalottenöffnung 5 bildet.

Anstatt des Halterings 13 könnten auch von der Kugelpfanne 4 frei wegragende Haltearme einen Kreis bildend angeordnet sein, die radial federnd beweglich sind und zwischen sich die Kalottenöffnung bilden.

An seinen axialen Enden besitzt der Verriegelungskorb 12 radial nach außen gerichtete Rasten 14, die die Mündungsbereiche der Ausnehmung 11 hintergreifen und so den Verriegelungskorb 12 axial in der Ausnehmung 11 sichern.

In Längserstreckungsrichtung des Gabelstücks und in der zwischen und parallel zu dessen Gabelschenkeln 26 gebildeten Ebene besitzt die Kugelpfanne eine zu ihrem Zentrum gerichtete radiale schlitzartige Zapfenöffnung 18, durch die das freie Ende der Kolbenstange 3 in die Kugelpfanne 4 ragt und dort mit der Kugel 7 verschraubt ist. Dazu besitzt die Kugel 7 eine radial gerichtete Gewindebohrung 15, in die die an seinem Ende mit einem entsprechenden Gewinde 16 versehene Kolbenstange 3 eingeschraubt ist.

Die zwischen den Gabelschenkeln 26 gebildete Ebene sowie die Ebene, in der sich die schlitzartige Zapfenöffnung 18 befindet, bildet eine Schwenkebene der Kolbenstange 3 und die Längsseitige Öffnung des Gabelstücks einen Zapfenschlitz 19, in dem die Kolbenstange 3 schwenkbar ist.

Damit sich beim Einschrauben der Kolbenstange 3 in die Gewindebohrung 15 die Kugel 7 nicht verdreht, besitzt sie eine radial nach außen mündende Ausnehmung 17, die etwa koaxial zur Kalottenöffnung 5 gerichtet ist und in die von außen durch die Kalottenöffnung 5 ein Werkzeug einführbar ist, mit dem ein Verdrehen der Kugel 7 beim Einschrauben der Kolbenstange 3 verhindert wird.

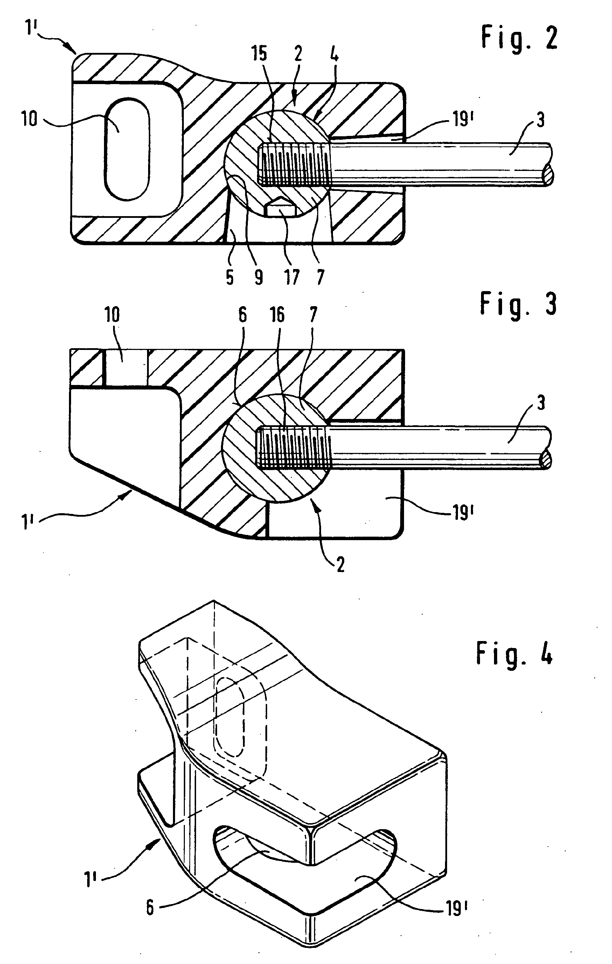

Bei dem Ausführungsbeispiel der Figuren 2 bis 4 ist das Halteteil 1' als ein Kunststoffgußteil einteilig mit der Kugelpfanne 4 ausgebildet. Wie bei dem Ausführungsbeispiel der Figur 1 besitzt das Halteteil 1' an seinem einen Endbereich ein Langloch 10 zur Befestigung an einem Karosserieteil oder einer Tür.

Von der kalottenförmigen Ausnehmung 11 erstreckt sich quer zur Längserstreckung der Kolbenstange 3 die Kalottenöffnung 5 und die Kolbenstange 3 ist durch einen dazu etwa rechtwinklig sich erstreckenden Zapfenschlitz 19' im Halteteil 1' in die kalottenförmige Ausnehmung 11 geführt und auf die gleiche Weise mit der dazu angeordneten Kugel 7 verschraubt, wie in Figur 1.

Der radial zur Kugelpfanne 4 durchgehende Zapfenschlitz 19', der unter einem Winkel von etwa 90° zur Erstreckung der Kalottenöffnung 5 ausgebildet ist erstreckt sich um etwa 90° radial zur Kugelpfanne 4. Die Breite des Zapfenschlitzes 19 ist leicht größer als der Durchmesser der Kolbenstange 3.

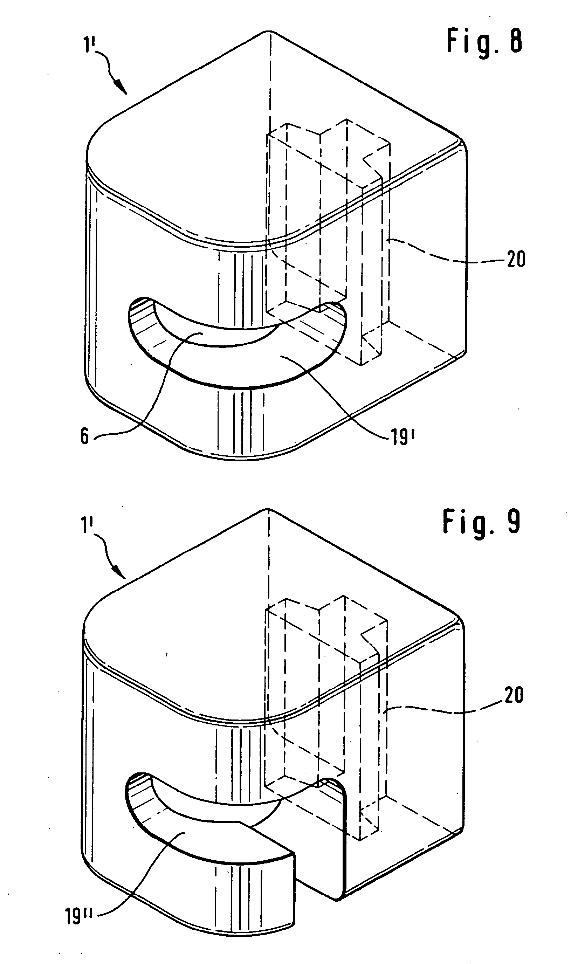

Wie das Ausführungsbeispiel der Figur 9 zeigt, kann der eine Endbereich des Zapfenschlitzes 19"sich etwa axial zur Kalottenöffnung 5 nach außen mündend erstrecken, so daß die Kugel 7 bereits vor ihrem Einführen in die Kugelpfanne 4 mit der Kolbenstange 3 verbunden werden kann.

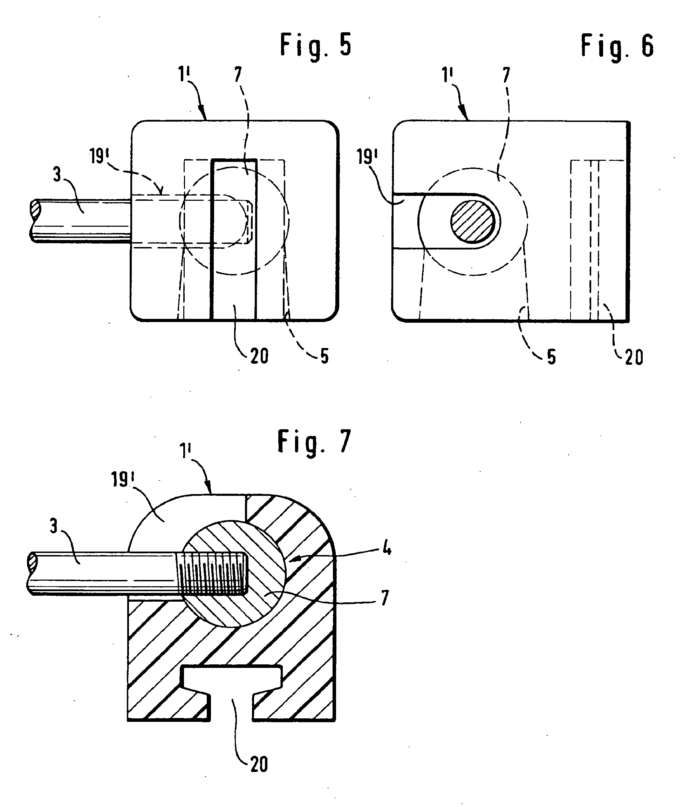

Das Ausführungsbeispiel der Figuren 5 bis 8 unterscheidet sich von dem Ausführungsbeispiel der Figuren 2 bis 4 nur hinsichtlich der Befestigungsstelle. Diese ist als T-förmige Nut 20 ausgebildet, die sich quer zur Schwenkebene der Kolbenstange 3 erstreckt und in die ein an der Karosserie oder der Tür angeordneter Klemmkeil entsprechender Form einführbar ist und eine Klemmkeilverbindung bildet.

Eine solche Befestigungsstelle besitzt auch das Ausführungsbeispiel der Figur 9.

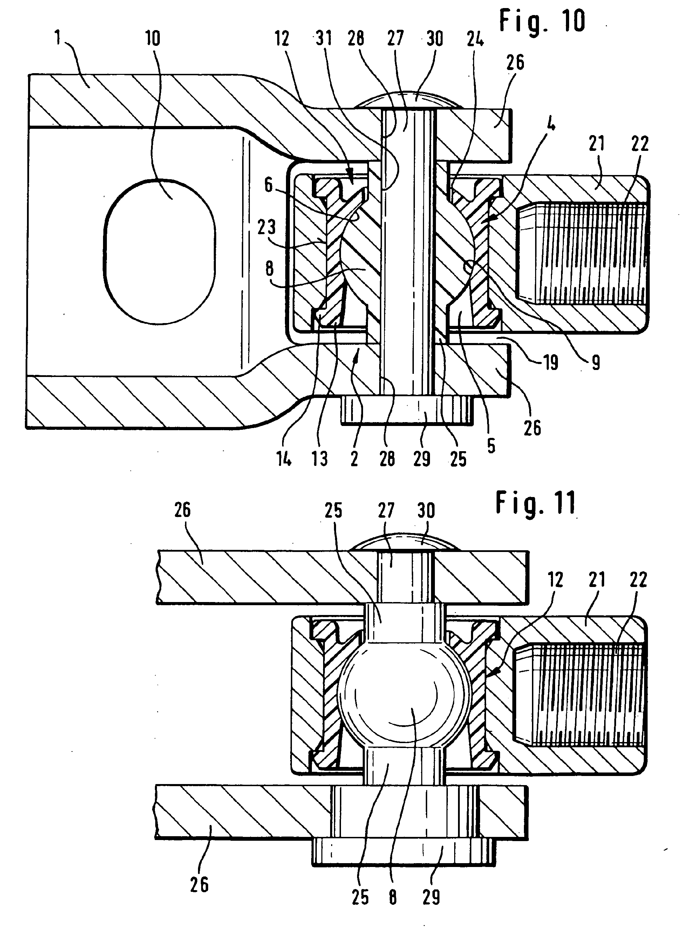

Bei den Ausführungsbeispielen der Figuren 10 und 11 ist die Kugelpfanne 4 an einem Kugelpfannenhalter 21 angeordnet, der mittels einer Schraubverbindung koaxial mit dem freien Ende der Kolbenstange 3 verbunden ist. Dabei ist dieses freie Ende der Kolbenstange 3 mit einem Gewinde 16 versehen, das in einer entsprechenden Gewindebohrung 22 des Kugelpfannenhalters 21 eingeschraubt ist.

Der Aufbau des Halteteils 1 entspricht dem Gabelstück des Ausführungsbeispiels der Figur 1.

Die Kugelpfanne 4 besitzt wie bei dem Ausführungsbeispiel der Figur 1 einen Verriegelungskorb 12, der in eine durchgehende Ausnehmung 23 des Kugelpfannenhalters 21 eingesetzt und durch Rasten 14 gesichert ist. Die Ausnehmung 23 erstreckt sich dabei etwa rechtwinklig zur Schwenkebene der Kolbenstange.

Koaxial zur Kalottenöffnung 5 ist der Kalottenöffnung 5 gegenüberliegend in der Kugelpfanne 4 eine Durchgangsöffnung 24 ausgebildet. In der Kugelpfanne 4 ist der Kugelabschnitt 8 schwenkbar gelagert, der koaxial beidseitig Abstandszapfen 25 aufweist, die durch die Kalottenöffnung 5 und die Durchgangsöffnung 24 ragen und mit ihren Stirnseiten an den Innenseiten der Gabelschenkel 26 des Gabelstücks in Anlage sind. Dadurch wird der Kugelpfannenhalter 21 immer mittig zwischen den Gabelschenkeln 26 gehalten. Koaxial zu den Abstandszapfen 25 besitzt der Kugelabschnitt 8 beidseitig hervorstehend eine Achse 27 und ist entsprechende Bohrungen 28 in den Gabelschenkeln 26 durchragend an diesen befestigt. Dazu weist die Achse 27 an ihrem einen Ende einen radial sich erweiternden Kopf 29 auf, der an der Außenseite des einen Gabelschenkels 26 anliegt, während das andere Ende der Achse 27 an der Außenseite des anderen Gabelschenkels 26 anliegend zu einem Nietkopf 30 radial erweitert ist.

In Figur 10 ist die Achse 27 ein eine entsprechende Bohrung 31 des Kugelabschnitts 8 durchragender Achszapfen, während in Figur 11 die Enden der Achse 27 einteilig mit dem Kugelabschnitt 8 ausgebildet sind.

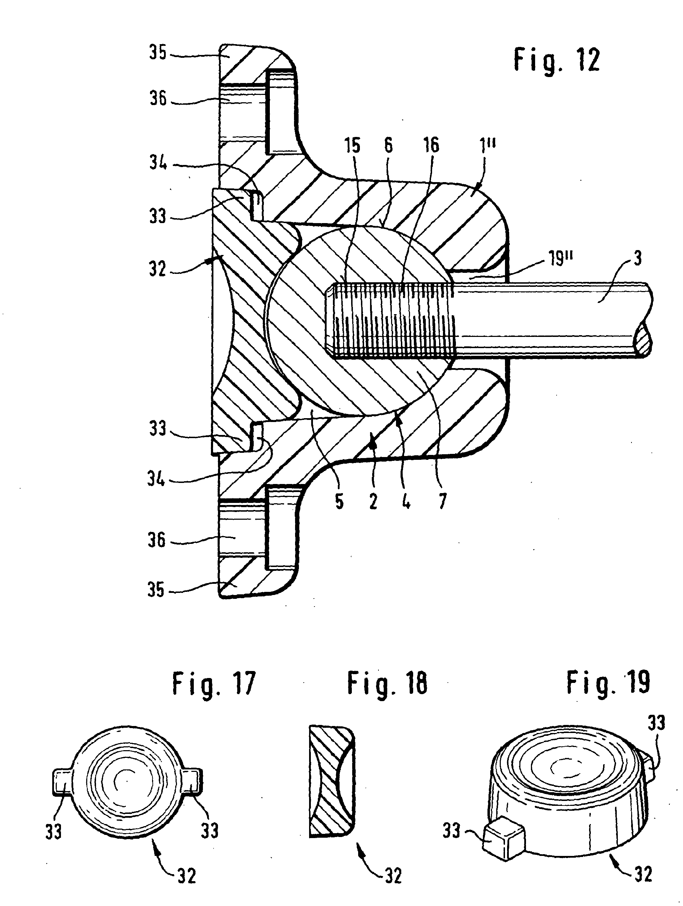

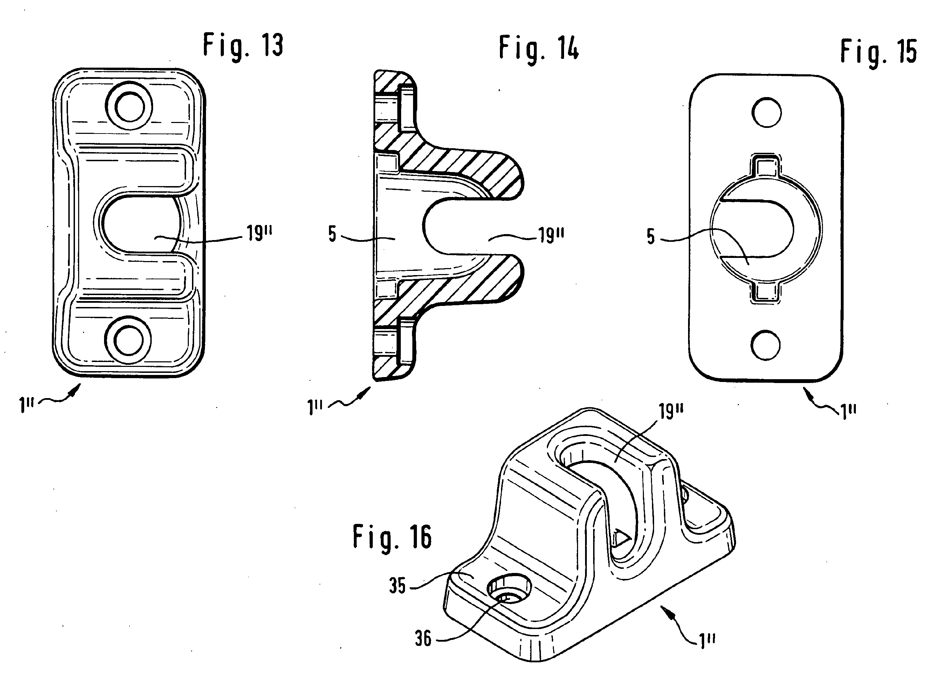

Bei dem Ausführungsbeispiel der Figuren 12 bis 19 ist das Halteteil 1" ein Kunststoffteil und weist einteilig auch die Kugelpfanne 4 auf.

Die Kalottenöffnung 5 mündet entgegengesetzt dem Zapfenschlitz 19" in die kalottenförmige Ausnehmung 11.

Die den Zapfenschlitz 19" durchragende Kolbenstange 3 ist an ihrem freien Ende mit einem Gewinde 16 versehen und in einer entsprechenden Gewindebohrung 15 der Kugel 7 eingeschraubt.

Der Mündungsbereich der Kalottenöffnung 5 ist durch einen Kalottenboden 32 verschlossen, der entsprechend der Kugel 7 an der dieser zugewandten Seite kalottenförmig ausgebildet ist. Die Kugel 7 ist an dieser kalottenförmigen Kontur des Kalottenbodens 32 in Anlage.

Diametral sich gegenüberliegend stehen von dem kreisförmigen Kalottenboden 32 radial zwei Führungszapfen 33 hervor, die in entsprechende Ausnehmungen 34 im Halteteil 1" und eine Verdrehsicherung des Kalottenbodens 32 bilden.

An dem die Mündung der Kalottenöffnung 5 aufweisenden Ende besitzt das Halteteil 1" radial sich erstreckende Laschen 35 auf, die mit axial zur Längserstreckungsrichtung der Kolbenstange 3 gerichteten Ausnehmungen 36 versehen sind, die Befestigungsstellen zur Befestigung mittels Schrauben an der Karosserie oder der Tür bilden.

Der Zapfenschlitz 19" ist entsprechend dem Zapfenschlitz 19' der Figuren 2 bis 4 ausgebildet.

### Bezugszeichenliste

- 1: Halteteil
- 1': Halteteil
- 1": Halteteil
- 2: Kugelgelenk
- 3: Kolbenstange
- 4: Kugelpfanne
- 5: Kalottenöffnung
- 6: Ausnehmung
- 7: Kugel
- 8: Kugelabschnitt
- 9: Anlageschulter
- 10: Langloch
- 11: Ausnehmung
- 12: Verriegelungskorb
- 13: Haltering
- 14: Rasten
- 15: Gewindebohrung
- 16: Gewinde
- 17: Ausnehmung
- 18: Zapfenöffnung
- 19: Zapfenschlitz
- 19': Zapfenschlitz
- 19": Zapfenschlitz
- 20: Nut
- 21: Kugelpfannenhalter
- 22: Gewindebohrung
- 23: Ausnehmung
- 24: Durchgangsöffnung
- 25: Abstandszapfen
- 26: Gabelschenkel
- 27: Achse
- 28: Bohrungen
- 29: Kopf
- 30: Nietkopf
- 31: Bohrung
- 32: Kalottenboden
- 33: Führungszapfen
- 34: Ausnehmungen
- 35: Lasche
- 36: Ausnehmungen

## Patentansprüche

1. Kugelgelenkverbindung mit einem eine Befestigungsstelle zur festen Anordnung aufweisenden Halteteil (1, 1', 1") und einer über ein Kugelgelenk (2) an dem Halteteil (1, 1', 1") in einem Schwenkwinkelbereich in einer Schwenkebene schwenkbar angeordneten Stangenteil eines Kolben-Zylinderaggregats, wobei das Kugelgelenk (2) eine Kugelpfanne (4) mit einer als Kugelsitz dienenden kugelkalottenförmigen Ausnehmung (6) der Kugelpfanne (4) aufweist, die eine radial gerichtete Kalottenöffnung (5) besitzt, durch die ein kugelartiges Bauteil in den Kugelsitz einführbar und in der Kugelpfanne (4) bewegbar lagerbar ist, das entweder von einer Anlageschulter (9) der Kugelpfanne (4) hintergriffen wird *oder mit einem Kalottenboden (32), durch den die Kalottenöffnung abgedeckt ist, verschließbar ist,* wobei sich die Befestigungsstelle und das Kugelgelenk (2) etwa in der Schwenkebene befinden und das Stangenteil von dem kugelartigen Bauteil aus einen Zapfenschlitz (19, 19', 19") durchragt, der sich sektorartig mindestens dem Schwenkwinkel entsprechend radial zum Kugelsitz erstreckt und eine mindestens der Dicke des Stangenteils entsprechende Breite aufweist, **dadurch gekennzeichnet, daß** im Falle eines Kallottenbodens (32) die Kalottenöffnung (5) entgegengesetzt dem Zapfenschlitz (19") in die kalottenförmige Ausnehmung (6) mündet, wobei das Halteteil (1") an dem die Mündung der Kalottenöffnung (5) aufweisenden Ende Befestigungsstellen zur Befestigun an einer Karosserie oder einer Tür aufweist oder daß im Falle einer Anlageschulter (9) die Kalottenöffnung (5) sich unter einem Winkel zur Schwenkebene des Stangenteils erstreckt, so *daß die Kalottenöffnung (5) sich nicht in der Kraftflußrichtung der Kugelgelenkverbindung befindet.*

2. Kugelgelenkverbindung nach Anspruch 1, **dadurch gekennzeichnet, daß** *das Stangenteil eine Kobenstange (3) des Kolben-Zylinderaggregats ist.*

3. Kugelgelenkverbindung nach einem der vorhergehenden Ansprüche, **dadurch gekennzeichnet, daß** die Kugelpfanne (4) an dem Halteteil (1) angeordnet ist.

4. Kugelgelenkverbindung nach den Ansprüchen 2 und 3, **dadurch gekennzeichnet, daß** das kugelartige Bauteil eine Kugel (7) ist, die einen das Stangenteil bildenden, radial sich erstreckenden Kugelzapfen besitzt, der von der Kugel (7) aus durch den Zapfenschlitz (19, 19') des Halteteils (1, 1') hindurch geführt ist, der sich unter einem Winkel zur Kalottenöffnung (5) erstreckt.

5. Kugelgelenkverbindung nach Anspruch 4, **dadurch gekennzeichnet, daß** sich der Zapfenschlitz (19, 19') unter einem Winkel von etwa 90° zur Kalottenöffnung (5) erstreckt.

6. Kugelgelenkverbindung nach einem der Ansprüche 1 bis 3, **dadurch gekennzeichnet , daß** das kugelartige Bauteil eine Kugel (7) ist, die einen das Stangenteil bildenden, radial sich erstreckenden Kugelzapfen besitzt, der von der Kugel (7) aus durch den Zapfenschlitz (19") des Halteteils (1 ") hindurch geführt ist, wobei in Bezug auf den Kugelsitz die Kalottenöffnung (5) dem Zapfenschlitz (19") gegenüber liegt und durch einen Kalottenboden (32) verschließbar ist, an dem das kugelartige Bauteil abstützbar ist.

7. Kugelgelenkverbindung nach einem der vorhergehenden Ansprüche, **dadurch gekennzeichnet, daß** die Kugel (7) mit einer radial gerichteten Gewindebohrung (15) versehen ist, in die der an seinem einen Ende mit einem entsprechenden Gewinde (16) versehene Kugelzapfen eingeschraubt ist.

8. Kugelgelenkverbindung nach Anspruch 7, **dadurch gekennzeichnet, daß** das Gewinde der Gewindebohrung ein selbstformendes Gewinde ist, das durch Einschrauben des Gewindes des Kugelzapfens in eine Bohrung der Kugel erzeugt ist.

9. Kugelgelenkverbindung nach einem der Ansprüche 7 und 8, **dadurch gekennzeichnet, daß** die Kugel (7) eine radial nach außen mündende Ausnehmung (17) aufweist, die etwa sich koaxial zur Kalottenöffnung (5) erstreckt.

10. Kugelgelenkverbindung nach einem der vorhergehenden Ansprüche, **dadurch gekennzeichnet, daß**derZapfenschlitz(19") in einem Endbereich sich etwa axial zur Kalottenöffnung (5) nach außen mündend erstreckt.

11. Kugelgelenkverbindung nach einem der Ansprüche 1 und 2, **dadurch gekennzeichnet, daß** die Kugelpfanne (4) an dem Stangenteil angeordnet ist.

12. Kugelgelenkverbindung nach Anspruch 11, **dadurch gekennzeichnet, daß** die Kugelpfanne (4) an einem Kugelpfannenhalter (21) angeordnet ist, der axial, insbesondere koaxial an einem Ende des Stangenteils angeordnet ist.

13. Kugelgelenkverbindung nach Anspruch 12, **dadurch gekennzeichnet, daß** der Kugelpfannenhalter (21) mittels einer Schraubverbindung mit dem Stangenteil verbunden ist.

14. Kugelgelenkverbindung nach Anspruch 13, **dadurch gekennzeichnet, daß** das mit einem Gewinde (16) versehene Ende des Stangenteils in eine Gewindebohrung (22) des Kugelpfannenhalters (21) eingeschraubt ist.

15. Kugelgelenkverbindung nach einem der Ansprüche 11 bis 14, **dadurch gekennzeichnet, daß** das kugelartige Bauteil einen durch die Kalottenöffnung (5) in die Kugelpfanne (4) einführbaren Kugelabschnitt (8) aufweist, der mittels einem oder mehreren Halteelementen an dem Halteteil (1) anordenbar ist.

16. Kugelgelenkverbindung nach Anspruch 15, **dadurch gekennzeichnet, daß** das Halteelement eine sich etwa quer zur Schwenkebene erstreckende Achse (27) ist, die mit einem oder beiden Enden an dem Halteteil (1) befestigt ist.

17. Kugelgelenkverbindung nach Anspruch 16, **dadurch gekennzeichnet, daß** das oder die Enden der Achse (27) einteilig mit dem Kugelabschnitt (8) ausgebildet sind.

18. Kugelgelenkverbindung nach Anspruch 16, **dadurch gekennzeichnet, daß** die Achse (27) ein eine entsprechende Bohrung (31) des Kugelabschnitts (8) durchragender Achszapfen ist.

19. Kugelgelenkverbindung nach einem der Ansprüche 16 bis 18, **dadurch gekennzeichnet, daß** das oder die Enden der Achse (27) in entsprechenden Bohrungen (28) des Halteteils (1) insbesondere axial unverschiebbar eingesetzt sind.

20. Kugelgelenkverbindung nach einem der Ansprüche 1 bis 3 und 6 bis 19, **dadurch gekennzeichnet, daß** die Kugelpfanne (4) einen Verriegelungskorb (12) besitzt, der in eine Ausnehmung (11) des Halteteils(1), des Stangenteils oder des Kugelpfannenhalters (21) eingesetzt ist.

21. Kugelgelenkverbindung nach Anspruch 20, **dadurch gekennzeichnet, daß** der Verriegelungskorb von der Kugelpfanne frei wegragende Haltearme besitzt, die kreisformartig angeordnet und radial beweglich sind sowie sich in Erstreckungsrichtung der Kalottenöffnung erstrecken und zwischen sich die Kalottenöffnung bilden.

22. Kugelgelenkverbindung nach einem der Ansprüche 20 und 21, **dadurch gekennzeichnet, daß** der Verriegelungskorb an einem oder beiden Enden radial nach außen gerichtete Rasten besitzt, die bei in die Ausnehmung des Halteteils, des Stangenteils oder des Kugelpfannenhalters eingesetztem Verriegelungskorb den oder die Mündungsbereiche der Ausnehmung hintergreifen.

23. Kugelgelenkverbindung nach einem der vorhergehenden Ansprüche, **dadurch gekennzeichnet, daß** die Befestigungsstelle durch eine oder mehrere Ausnehmungen, insbesondere durch Langlöcher (10) gebildet ist.

24. Kugelgelenkverbindung nach einem der Ansprüche 1 bis 23, **dadurch gekennzeichnet, daß** die Befestigungsstelle durch eine Klemmkeilverbindung (20) gebildet ist.

## Claims

1. Ball-and-socket joint connection, having a retaining part (1, 1', 1") which has a fastening point for fixedly arranging it, and a rod part of a piston/cylinder assembly, which rod part is arranged pivotably in a pivoting-angle region in a pivoting plane via a ball-and-socket joint (2) on the retaining part (1, 1', 1"), the ball-and-socket joint (2) having a ball socket (4) with a spherical-cap-shaped recess (6) of the ball socket (4), which recess serves as a ball seat and has a radially directed spherical-cap opening (5) through which a ball-like component can be introduced into the ball seat and can be mounted moveably in the ball socket (4), the said component either being gripped from behind by a bearing shoulder (9) of the ball socket (4) or being closable by a spherical-cap base (32) by means of which the spherical-cap opening is covered, the fastening point and the ball-and-socket joint (2) being situated approximately in the pivoting plane and the rod part protruding from the ball-like component out of a journal slot (19, 19', 19") which extends radially to the ball seat in a sector-like manner at least corresponding to the pivoting angle and having a width corresponding at least to the thickness of the rod part, **characterized in that**, in the case of a spherical-cap base (32), the spherical-cap opening (5) opens in the opposite direction to the journal slot (19") into the spherical-cap-shaped recess (6), with the retaining part (1"), at the end having the mouth of the spherical-cap opening (5), having fastening points for fastening to a vehicle body or to a door, or **in that**, in the case of a bearing shoulder (9), the spherical-cap opening (5) extends at an angle to the pivoting plane of the rod part such that the spherical-cap opening (5) is not located in the force-flux direction of the ball-and-socket joint.

2. Ball-and-socket joint connection according to Claim 1, **characterized in that** the rod part is a piston rod (3) of the piston/cylinder assembly.

3. Ball-and-socket joint connection according to one of the preceding claims, **characterized in that** the ball socket (4) is arranged on the retaining part (1) .

4. Ball-and-socket joint connection according to Claims 2 and 3, **characterized in that** the ball-like component is a ball (7) which has a ball journal which forms the rod part, extends radially and is guided from the ball (7) through the journal slot (19, 19') of the retaining part (1, 1') and extends at an angle to the spherical-cap opening (5).

5. Ball-and-socket joint connection according to Claim 4, **characterized in that** the journal slot (19, 19') extends at an angle of approximately 90° to the spherical-cap opening (5).

6. Ball-and-socket joint connection according to one of Claims 1 to 3, **characterized in that** the ball-like component is a ball (7) which has a ball journal which forms the rod part, extends radially and is guided from the ball (7) through the journal slot (19") of the retaining part (1"), the spherical-cap opening (5) lying opposite the journal slot (19") with respect to the ball seat and being closable by a spherical-cap base (32) on which the ball-like component can be supported.

7. Ball-and-socket joint connection according to one of the preceding claims, **characterized in that** the ball (7) is provided with a radially directed threaded hole (15) into which the ball journal, which is provided at its one end with a corresponding thread (16), is screwed.

8. Ball-and-socket joint connection according to Claim 7, **characterized in that** the thread of the threaded hole is a self-forming thread which is produced by screwing the thread of the ball journal into a hole of the ball.

9. Ball-and-socket joint connection according to either of Claims 7 and 8, **characterized in that** the ball (7) has a recess (17) which opens radially outwards and extends approximately coaxially to the spherical-cap opening (5).

10. Ball-and-socket joint connection according to one of the preceding claims, **characterized in that** the journal slot (19") in an end region extends opening outwards approximately axially to the spherical-cap opening (5).

11. Ball-and-socket joint connection according to either of Claims 1 and 2, **characterized in that** the ball socket (4) is arranged on the rod part.

12. Ball-and-socket joint connection according to Claim 11, **characterized in that** the ball socket (4) is arranged on a ball-socket holder (21) which is arranged axially, in particular coaxially, on one end of the rod part.

13. Ball-and-socket joint connection according to Claim 12, **characterized in that** the ball-socket holder (21) is connected to the rod part by means of a screw connection.

14. Ball-and-socket joint connection according to Claim 13, **characterized in that** that end of the rod part which is provided with a thread (16) is screwed into a threaded hole (22) of the ball-socket holder (21).

15. Ball-and-socket joint connection according to one of Claims 11 to 14, **characterized in that** the ball-like component has a ball section (8) which can be introduced through the spherical-cap opening (5) into the ball socket (4) and can be arranged on the retaining part (1) by means of one or more retaining elements.

16. Ball-and-socket joint connection according to Claim 15, **characterized in that** the retaining element is an axle (27) which extends approximately transversely to the pivoting plane and is fastened at one or both ends to the retaining part (1).

17. Ball-and-socket joint connection according to Claim 16, **characterized in that** the end or the ends of the axle (27) are formed integrally with the ball section (8).

18. Ball-and-socket joint connection according to Claim 16, **characterized in that** the axle (27) is an axle journal which protrudes through a corresponding hole (31) of the ball section (8).

19. Ball-and-socket joint connection according to one of Claims 16 to 18, **characterized in that** the end or the ends of the axle (27) are inserted, in particular in an axially non-displaceable manner, in corresponding holes (28) of the retaining part (1) .

20. Ball-and-socket joint connection according to one of Claims 1 to 3 and 6 to 19, **characterized in that** the ball socket (4) has a locking cage (12) which is inserted into a recess (11) of the retaining part (1), the rod part or the ball-socket holder (21).

21. Ball-and-socket joint connection according to Claim 20, **characterized in that** the locking cage has retaining arms which protrude away freely from the ball socket, are arranged in the manner of a circle and are radially moveable and also extend in the direction of extent of the spherical-cap opening and form the spherical-cap opening between them.

22. Ball-and-socket joint connection according to either of Claims 20 and 21, **characterized in that** the locking cage has, at one or both ends, radially outwardly directed catches which, with the locking cage inserted into the recess of the retaining part, the rod part or the ball-socket holder, grip behind the mouth region or the mouth regions of the recess.

23. Ball-and-socket joint connection according to one of the preceding claims, **characterized in that** the fastening point is formed by one or more recesses, in particular by elongated holes (10).

24. Ball-and-socket joint connection according to one of Claims 1 to 23, **characterized in that** the fastening point is formed by a clamping-wedge connection (20).

## Revendications

1. Connexion par articulation à rotule, comprenant une partie de retenue (1, 1', 1") présentant un point de fixation pour une disposition fixe, et une partie de tige d'une unité cylindre-piston disposée de manière à pouvoir pivoter sur la partie de retenue (1, 1', 1") dans une plage angulaire de pivotement dans un plan de pivotement par le biais d'une articulation à rotule (2), l'articulation à rotule (2) présentant une cavité sphérique (4) avec un évidement (6) de la cavité sphérique (4) en forme de calotte sphérique servant de siège de rotule, la cavité sphérique (4) présentant une ouverture de calotte (5) orientée radialement à travers laquelle un composant en forme de rotule peut être introduit dans le siège de rotule et peut être supporté de manière mobile dans la cavité sphérique (4), lequel peut être saisi par l'arrière par un épaulement d'appui (9) de la cavité sphérique (4) ou bien peut être fermé par un fond de calotte (32) par lequel l'ouverture de calotte est fermée, le point de fixation et la rotule (2) se trouvant approximativement dans le plan de pivotement et la partie de tige sortant depuis le composant en forme de rotule hors d'une fente de tourillon (19, 19', 19"), qui s'étend sous forme de secteur radialement par rapport au siège de rotule au moins en correspondant à l'angle de pivotement et présente une largeur correspondant au moins à l'épaisseur de la partie de tige, **caractérisée en ce que** dans le cas d'un fond de calotte (32), l'ouverture de calotte (5) débouche dans l'évidement (6) en forme de calotte à l'opposé de la fente de tourillon (19"), la partie de retenue (1") présentant au niveau de l'extrémité présentant l'embouchure de l'ouverture de calotte (5) des points de fixation pour la fixation à une carrosserie ou une porte et **en ce que**, dans le cas d'un épaulement d'appui (9), l'ouverture de calotte (5) s'étend suivant un certain angle par rapport au plan de pivotement de la partie de tige, de telle sorte que l'ouverture de calotte (5) ne se trouve pas dans le sens du flux de force de la connexion par articulation à rotule.

2. Connexion par articulation à rotule selon la revendication 1, **caractérisée en ce que** la partie de tige est une tige de piston (3) de l'unité cylindre-piston.

3. Connexion par articulation à rotule selon l'une quelconque des revendications précédentes, **caractérisée en ce que** la cavité sphérique (4) est disposée sur la partie de retenue (1).

4. Connexion par articulation à rotule selon les revendications 2 et 3, **caractérisée en ce que** le composant en forme de rotule est une rotule (7) qui possède un tourillon de rotule s'étendant radialement et formant la partie de tige, qui est guidé hors de la rotule (7) à travers la fente de tourillon (19, 19') de la partie de retenue (1, 1') qui s'étend suivant un certain angle par rapport à l'ouverture de calotte (5).

5. Connexion par articulation à rotule selon la revendication 4, **caractérisée en ce que** la fente de tourillon (19, 19') s'étend suivant un certain angle d'environ 90° par rapport à l'ouverture de calotte (5).

6. Connexion par articulation à rotule selon l'une quelconque des revendications 1 à 3, **caractérisée en ce que** le composant en forme de rotule est une rotule (7), qui possède un tourillon de rotule s'étendant radialement et formant la partie de tige, lequel est guidé depuis la rotule (7) à travers la fente de tourillon (19") de la partie de retenue (1"), l'ouverture de calotte (5), par rapport à la fente de rotule, étant opposée à la fente de tourillon (19") et pouvant être fermée par un fond de calotte (32) sur lequel le composant en forme de rotule peut s'appuyer.

7. Connexion par articulation à rotule selon l'une quelconque des revendications précédentes, **caractérisée en ce que** la rotule (7) est pourvue d'un alésage fileté (15) orienté radialement, dans lequel est vissé le tourillon de rotule pourvu à l'une de ses extrémités d'un filetage correspondant (16).

8. Connexion par articulation à rotule selon la revendication 7, **caractérisée en ce que** le filetage de l'alésage fileté est un filetage auto-formeur, qui est produit par vissage du filetage du tourillon de rotule dans un alésage de la rotule.

9. Connexion par articulation à rotule selon l'une quelconque des revendications 7 et 8, **caractérisée en ce que** la rotule (7) présente un évidement (17) débouchant radialement vers l'extérieur, qui s'étend approximativement coaxialement à l'ouverture de calotte (5).

10. Connexion par articulation à rotule selon l'une quelconque des revendications précédentes, **caractérisée en ce que** la fente de tourillon (19") s'étend dans une région d'extrémité approximativement axialement par rapport à l'ouverture de calotte (5) en débouchant vers l'extérieur.

11. Connexion par articulation à rotule selon l'une quelconque des revendications 1 et 2, **caractérisée en ce que** la cavité sphérique (4) est disposée sur la partie de tige.

12. Connexion par articulation à rotule selon la revendication 11, **caractérisée en ce que** la cavité sphérique (4) est disposée sur un support de cavité sphérique (21) qui est disposé axialement, notamment coaxialement à une extrémité de la partie de tige.

13. Connexion par articulation à rotule selon la revendication 12, **caractérisée en ce que** le support de cavité sphérique (21) est connecté à la partie de tige au moyen d'une connexion vissée.

14. Connexion par articulation à rotule selon la revendication 13, **caractérisée en ce que** l'extrémité de la partie de tige pourvue d'un filetage (16) est vissée dans un alésage fileté (22) du support de cavité sphérique (21).

15. Connexion par articulation à rotule selon l'une quelconque des revendications 11 à 14, **caractérisée en ce que** le composant de type rotule présente une portion de rotule (8) pouvant être introduite à travers l'ouverture de calotte (5) dans la cavité sphérique (4), la portion de rotule pouvant être disposée sur la partie de retenue (1) au moyen d'un ou de plusieurs éléments de retenue.

16. Connexion par articulation à rotule selon la revendication 15, **caractérisée en ce que** l'élément de retenue est un axe (27) qui s'étend approximativement transversalement au plan de pivotement, qui est fixé à la partie de retenue (1) par une ou les deux extrémités.

17. Connexion par articulation à rotule selon la revendication 16, **caractérisée en ce que** la ou les extrémités de l'axe (27) sont réalisées d'une seule pièce avec la portion de rotule (8).

18. Connexion par articulation à rotule selon la revendication 16, **caractérisée en ce que** l'axe (27) est un tourillon d'axe traversant un alésage correspondant (31) de la portion de rotule (8).

19. Connexion par articulation à rotule selon l'une quelconque des revendications 16 à 18, **caractérisée en ce que** la ou les extrémités de l'axe (27) sont insérées de manière immobile, notamment axialement, dans des alésages correspondants (28) de la partie de retenue (1).

20. Connexion par articulation à rotule selon l'une quelconque des revendications 1 à 3 et 6 à 19, **caractérisée en ce que** la cavité sphérique (4) possède une cloche de verrouillage (12) qui est insérée dans un évidement (11) de la partie de retenue (1), de la partie de tige ou du support de cavité sphérique (21).

21. Connexion par articulation à rotule selon la revendication 20, **caractérisée en ce que** la cloche de verrouillage possède des bras de retenue saillant librement à l'écart de la cavité sphérique, qui sont disposés sous forme circulaire et qui sont déplaçables radialement, s'étendent dans la direction d'étendue de l'ouverture de calotte et forment entre eux l'ouverture de calotte.

22. Connexion par articulation à rotule selon l'une quelconque des revendications 20 et 21, **caractérisée en ce que** la cloche de verrouillage possède à une ou aux deux extrémités des cliquets orientés radialement vers l'extérieur, qui viennent en prise avec la ou les régions d'embouchure de l'évidement lorsque la cloche de verrouillage est insérée dans l'évidement de la partie de retenue, de la partie de tige ou du support de cavité sphérique.

23. Connexion par articulation à rotule selon l'une quelconque des revendications précédentes, **caractérisée en ce que** le point de fixation est formé par un ou plusieurs évidements, notamment par des trous oblongs (10).

24. Connexion par articulation à rotule selon l'une quelconque des revendications 1 à 23, **caractérisée en ce que** le point de fixation est formé par une connexion par clavette de serrage (20).
